# EUROPEAN PATENT APPLICATION

(11) **EP 1 743 686 A2**
(43) Date of publication of application: **17.01.2007**
(21) Application number: 06253278.3
(22) Date of filing: 23.06.2006
(51) Int. Cl.: B01D 45/06

(54) **Method and apparatus for collecting and redirecting liquid separated from a gaseous stream**

(30) Priority: 15.07.2005 US 699624 P
(71) Applicant: Rohm and Haas Company, Philadelphia, PA 19106-2399 (US)
(72) Inventor: Barnett, John Q., Houston, Texas 77059 (US); Mason, Robert Michael, Houston, Texas 77059 (US); Goodwin, Jeffery Alan, Deer Park, Texas 77536 (US); Zamarripa, Rene, Houston, Texas 77059 (US); Hale, Timothy Allen, Houston, Texas 77024 (US)
(74) Representative: Kent, Venetia Katherine

(57) **Abstract**

Apparatus and a method for collecting and redirecting liquid which has been separated from a gaseous process stream by inertial separation techniques such that the separated liquid and gaseous stream are flowing co-currently or counter-currently within the same process apparatus. The apparatus has liquid catch means, such as a flange, for catching the separated liquid and flow-through means, such as a flow-through opening in the flange, for simultaneously allowing the gaseous materials to flow, co-currently or counter-currently with the separated liquid, through and past the liquid catch means and downstream on to further processing equipment. The method comprises collecting the separate liquid phase by catching the separate liquid phase as it drips and flows down the inner wall of the process apparatus, while simultaneously allowing the gaseous materials to flow on, co-currently or counter-currently with the separate liquid phase, to further processing equipment, using the aforesaid apparatus.

## Description

### Field of the Invention

The present invention relates to a method of collecting and redirecting liquids that have been separated from gaseous streams, as well as apparatus suitable for use in connection with that method.

### Background of the Invention

Many chemical manufacturing processes produce or otherwise involve gaseous materials which contain entrained liquid droplets. The entrained liquid may include one or more impurities, or one or more unreacted raw materials (reactants), or any number of other compounds, depending on the particular process. It is often beneficial to separate such entrained liquids from gaseous streams. For example, when entrained liquids are, or include, corrosive substances, it is beneficial to separate the entrained liquids prior to sending the gaseous materials to further processing equipment, to reduce or minimize corrosion of the equipment. Additionally, in some cases, the entrained liquids will interfere with the further processing of the gaseous materials and must, therefore, be removed to improve overall process efficiency and productivity.

Many known methods exist for separating entrained liquids from a gaseous stream. As discussed in U.S. Patent Nos. 5,181,943 and 6,649,137, as well as in U.S. Patent Application Publication Nos. US 2004/0226437 and US 2005/0056150, gravity, or inertial, separation utilizes the principle that when a stream comprising gas and entrained liquid is made to flow around a bend (for example, through an elbow conduit) and change direction, the gas will more easily flow through the directional change and continue on than the more dense liquid droplets, which tend to drop out and separate from the gas. Sometimes, vanes, baffles or plates of various shapes and configurations are positioned in the path of the flowing gas, at or near the position where the gas encounters the bend, and so provide a surface upon which the entrained liquid impacts, losing significant momentum and dropping out of the gas stream as a separate liquid phase. The term "inertial separation" shall be used hereinafter to refer to all such techniques and apparatus for separating entrained liquids from gaseous materials.

In some inertial separation techniques, due to the configuration of the process apparatus (see, for example, U.S. Patent Nos. 5,510,017 and 6,238,464), the separate liquid phase is caused by gravity to drip or flow perpendicularly to the direction in which the gaseous materials continue to flow. In such circumstances, capture of such separate liquid phase is simply a matter of positioning a tank, bucket or other vessel, in the downstream path of the flow of the separate liquid phase to capture it while avoiding capturing any of the gaseous material which is already flowing in a substantially different direction.

For example, U.S. Patent No. 5,510,017 describes a separator apparatus for efficient inertial separation of entrained liquids, as well as an apparatus configuration which collects the separated liquid. However, this technology utilizes only gravitational forces to cause the separated liquid to flow out of, and perpendicular to, the direction of flow of the gaseous materials and out of the process apparatus. Also, use of this apparatus in some process equipment may result in unacceptable pressure drops.

Similarly, U.S. Patent No. 6,238,464 describes a method and apparatus for separating droplets or particles from a gas stream and includes apparatus for collecting the separated droplets or particles. But, again, gravitational forces are relied upon to cause the separated droplets or particles to flow out of, and perpendicular to, the direction of flow of the gaseous materials and out of the process apparatus, whereupon collection of the separated droplets or particles is easily accomplished using a typical vessel. Additionally, use of this apparatus in some process equipment may result in acceptable pressure drops.

However, where the gaseous materials and separate liquid phase flow co-currently, i.e., in substantially the same direction in the process apparatus after separation, such as, for example, vertically downward within a conduit, tube, column, or pipe, capturing the separate liquid phase cannot be accomplished by the same method of placing a vessel in the downstream path of the separate liquid phase because this will interfere with the flow of the gaseous materials. Similarly, where the separate liquid phase impinges and drips or flows downward on the inner surface of process apparatus, such as a conduit, tube, column, or pipe, while the gaseous materials flow in the process equipment counter-currently, i.e., in substantially the opposite direction, from the separate liquid phase, attempting to capture the separate liquid phase by the aforesaid method of placing a vessel in the downstream path of the separate liquid phase will interfere with the reverse flow of the gaseous materials through the process apparatus. Furthermore, in both such circumstances, employing known methods and apparatus to capture the liquid phase may allow the liquid to become re-entrained as the gaseous materials and separate liquid phase continue to travel within the same apparatus.

Likewise, in some circumstances, the properties of a gaseous stream and the conditions present in the operating environment will cause some of the gaseous materials to go through a phase change to create a separate liquid phase which may accumulate on the walls of process apparatus. For example, a gaseous materials close to their dewpoint temperature may cool within process equipment, such as a conduit, thereby forming a fog or mist that comprises both liquid-phase and vapor-phase components. The composition of the liquid phase thus formed may be the same or different than the composition of the remaining vapor phase, depending on the purity of the original gaseous stream, but the difficulties in handling such a two-phase stream will be similar to those for streams formed by mechanical entrainment, such as the inertial separation mentioned above. It would be beneficial to

Thus, in many such situations where a separate liquid phase has been separated from gaseous materials within process equipment, whether by inertial separation, condensation or other means, it would be beneficial to be able to collect and remove the separate liquid phase from the process and process equipment while allowing the gaseous materials to continue on, past or through the collection and removal apparatus, to downstream equipment for further processing. Additionally, depending upon the nature of the separated liquid collected, it may further be beneficial to recycle at least a portion of it back into the process, or redirect it to storage, or even to further processing steps.

The present invention provides a method and apparatus which collects liquid separated from gaseous materials within process equipment and removes and redirects the separated liquid, while allowing the gas to continue flowing, co-currently or counter-currently, with the direction of the separated liquid, to downstream equipment for further processing.

### Summary of the Invention

The present invention provides an apparatus for collecting and redirecting liquid which has been separated from gaseous materials by inertial separation techniques. More particularly, the apparatus comprises liquid catch means for catching the separated liquid; drain means to drain the separated liquid from the catch means; conducting means for conducting the separated liquid away from process apparatus; and flow-through means for simultaneously allowing the gaseous materials to flow, co-currently or counter-currently with the separated liquid, through and past the liquid catch means and downstream on to further processing equipment. In particular embodiments of the apparatus the liquid catch means amy comprise a flange and the flow-through means may comprise a flow-through opening through the flange, the flange and flow-through opening being sized and shaped such that the separated liquid is caught by the flange, while the gaseous materials simultaneously flow through the flow-through opening and past the flange, co-currently or counter-currently with the separated liquid. Furthermore, the drain means may comprise at least one drain opening for allowing the separated liquid which is caught by the catch means to drain out of the apparatus and away from the process apparatus and the conducting means may comprise at least one conduit.

The present invention also provides a method for separating and collecting entrained liquid from a process stream comprising gaseous material and the entrained liquid, wherein at least a portion of entrained liquid is separated from the gaseous materials by inertial separation techniques and a separate liquid phase is formed, which drips and flows down an inner wall of process apparatus. More particularly, the method comprising the step of collecting the separate liquid phase by catching the separate liquid phase as it drips and flows down the inner wall of the process apparatus while simultaneously allowing the gaseous materials to flow on, co-currently or counter-currently with the separate liquid phase, to further processing equipment. The collecting step may be achieved by positioning collection means downstream of the dripping liquid phase and proximate to the inner wall of the process apparatus. The method according to the present invention may further comprise the one or both of the steps of draining the separate liquid phase from the catch means and conducting the separate liquid phase away from the process apparatus. The one or more of the steps of this method may be achieved by employing a collection means according to the aforesaid apparatus of the present invention.

### Brief Description of the Drawings

A more complete understanding of the present invention will be gained from the embodiments discussed hereinafter and with reference to the accompanying drawings, in which like reference numbers indicate like features, and wherein:
Figure 1 is an elevated perspective view of a collection trough in accordance with the apparatus of the present invention;
Figure 2 is a cut-away perspective view of the collection trough, taken along section line A-A of Figure 1 and looking in the direction of the arrows;
Figure 3 is a schematic representation of a generic chemical reaction process in which the method and apparatus of the present invention are useful;
Figure 4 is a perspective, partially cut-away view of the apparatus shown in area B of Figure 3, showing the apparatus of the present invention installed and in use; and
Figure 5 is an enlarged and more detailed cut-away perspective view of the apparatus shown in area C of Figure 4, showing the positioning and orientation of the collection trough installed in the conduit.

### Detailed Description of the Invention

It will be readily understood by persons of ordinary skill in the relevant art, based on the following description and the general knowledge in the relevant art, that the present invention is applicable to any process and any process apparatus which involve inertial separation of entrained liquids from gaseous materials to produce a separate liquid phase which collects, drips and flows on the inner walls of the process apparatus.

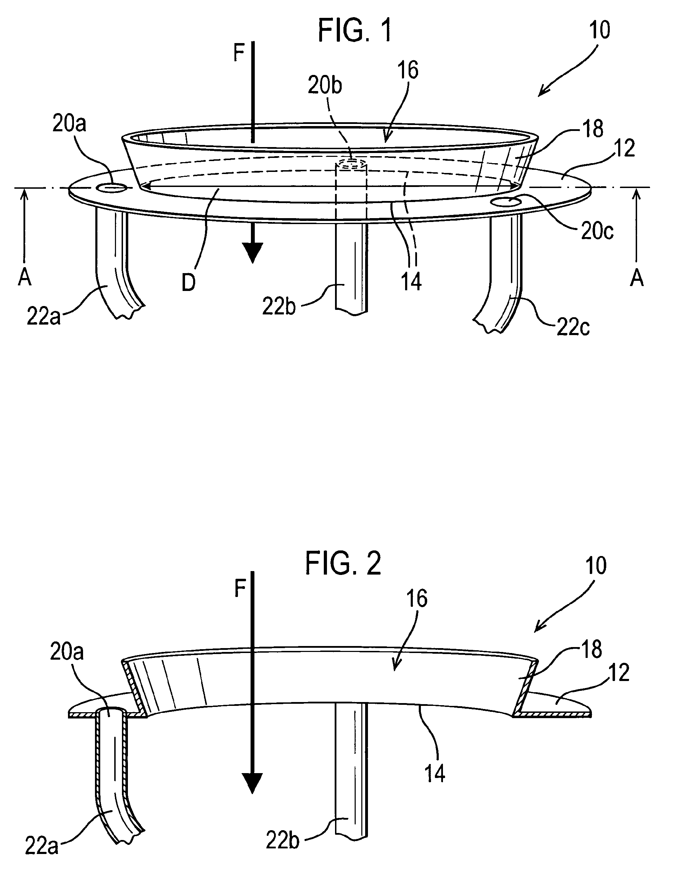

With reference to Figures 1 and 2, the configuration of one embodiment of the apparatus of the present invention, a collection means, or collection trough 10, will now be described in detail. Figure 1 shows an elevated perspective view of the collection trough 10, with phantom lines showing additional features which are otherwise not visible from this view. Figure 2 shows a cut-away perspective view of the collection trough 10, taken along section line A-A of Figure 1, and looking in the direction of the arrows. As will be discussed in further detail hereinafter in connection with specific features, the collection trough 10 is generally sized and shaped to fit proximate to apparatus, such as a conduit or pipe, through which a gas stream comprising gaseous materials and entrained liquid flows and in which the entrained liquid has been separated from the gaseous materials by inertial separation techniques and apparatus.

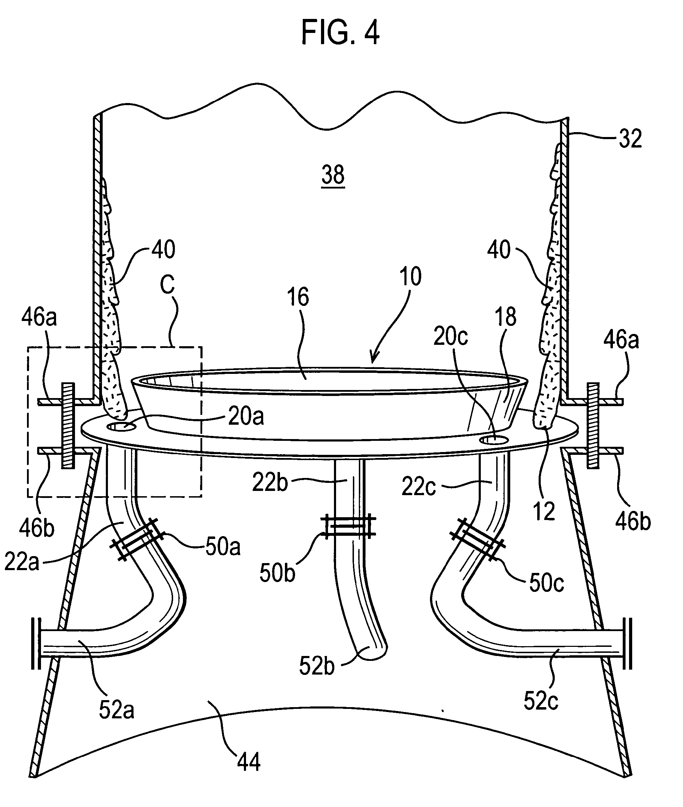

The collection trough 10 has liquid catch means, such as a base flange 12 for catching the separate liquid phase as it drips and flows from the inner wall of process equipment, as will be described hereinafter, and also for affixing the collection trough 10 to process apparatus (see, for example, Figure 4 discussed hereinafter). The base flange 12 has an inner annular edge 14 which forms a flow-through opening 16 (i.e., flow-through means) through the base flange 12 for simultaneously allowing the gaseous materials to flow through the collection trough 10, co-currently with the separated liquid, and on downstream to further processing equipment.

A beveled collar 18 (i.e., guiding means) extends from the inner edge 14 of the base flange 12, such that the beveled collar 18 surrounds the flow-through opening 16. The beveled collar 18 is for guiding the gaseous material, from which entrained liquid has been separated, through the flow-through opening 16 of the collection trough 12 in the direction of arrow F in Figures 1 and 2, thereby allowing the gaseous material to continue on to further processing apparatus 30.

The collection trough 10 also has drainage means, such as at least one drain opening 20a, 20b, 20c in the base flange 12, to drain the separate liquid phase from the base flange 12. The collection trough 10 also has conducting means, such as at least one drain conduit 22a, 22b, 22c, each of which is in fluid connection with an associated drain opening 20a, 20b, 20c, for conducting the liquid phase away from the process apparatus.

As will be readily understood and practicable by persons of ordinary skill in the art, one or more drain openings may be provided in the base flange 12, and should be sized and shaped to allow for self-venting flow of the separate liquid phase therethrough, using known correlations. As used herein, "self-venting flow" refers to ensuring continued disengagement of the gaseous materials such that the maximum uninterrupted flow of liquid phase into the drain openings 20a, 20b, 20c, and drain conduits 22a, 22b, 22c is achieved, without backflow or clogging. For example, the diameter (D in Figure 1) of the flow-through opening 16 of the collection trough 10 and the impact on dynamic (flow) pressure drop of the gaseous materials should be among the considerations when determining the number and size of the drain openings. In addition, the drain openings may have different cross-sectional shapes, such as circular, oval, rectangular, etc., according to the overall size and shape of the collection trough 10 and the fluid flow and pressure drop constraints and requirements of the process.

As will be described in further detail hereinafter, when the collection trough 10 is installed and in use, the base flange 12 thereof is proximate to an inner wall of the apparatus in which the entrained liquid had been separated from the gaseous materials such that the separate liquid phase, dripping and flowing down the inner wall, puddles and collects on the base flange 12. The separate liquid phase then drains through the drain openings 20a, 20b, 20c, and into the drain conduits 22a, 22b, 22c.

In one embodiment of the method of the present invention, at least a portion of entrained liquid is separated from gaseous materials in a process stream by inertial separation techniques, such that a separate liquid phase is formed and drips and flows down an inner wall of process apparatus, such as a conduit or pipe, while the gaseous materials continue on to further processing equipment. The method of the present invention further comprises the steps of catching the separate liquid phase as it drips and flows down the inner wall and then conducting the separate liquid phase away from the process apparatus. The steps of the method of the present invention are achieved in accordance with the present invention, by positioning collection means (such as, for example, the collection trough 10 of the present invention) downstream of the dripping liquid phase and proximate to the inner wall of the process apparatus. As discussed hereinabove, the collection means generally has liquid catch means and flow-through means for catching the separate liquid phase as it drips and flows from the inner wall of the process equipment, while simultaneously allowing the gaseous materials to flow, co-currently with the separated liquid, through the collection means, and on to further processing equipment. The collection means also has drain means to drain the separate liquid phase from the catch means, as well as conducting means for conducting the liquid phase away from the process apparatus.

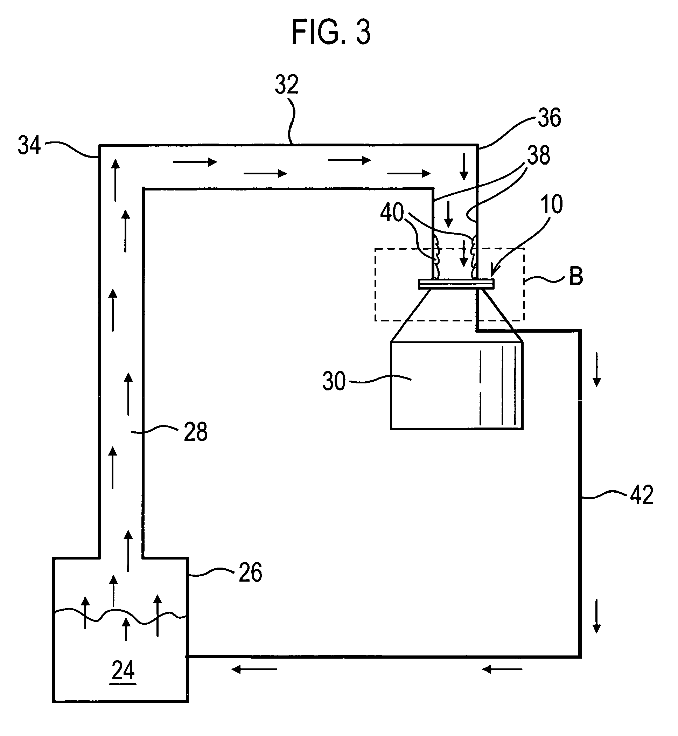

With reference to Figure 3, a schematic representation of a generic process is provided in which the apparatus and method of the present invention are useful. In this generic process, reactants 24 are reacted in a reactor vessel 26 to produce a vapor product stream 28 (represented by arrows in Figure 3, showing direction of flow). The vapor product stream 28 comprises gaseous materials and entrained liquid and is conducted to further processing apparatus 30 by conducting apparatus, such as a product conduit 32. It is noted that processes in which the collection trough 10 of the present invention may be useful are not limited to chemical reaction processes and their product streams. Rather, as will be readily recognized by persons of ordinary skill in the relevant art, the present invention may be useful in any proceses wherein liquid is separated from gaseous materials, including, but not limited to, unit operations involving distillation columns, flash drums, or boilers (not shown).

The product conduit 32 includes means for separating at least a portion of the entrained liquid from the gaseous materials by inertial separation, such as, for example, one or more elbow bend sections, vanes, baffles, or plates, and combinations thereof. For example, the product conduit 32 shown in Figure 3 has two elbow bend sections 34, 36. In the particular process shown schematically in Figure 3, the entrained liquid separates from the gaseous materials primarily in the second elbow bend section 36 and forms a separate liquid phase which builds up and tends to drip and flow down along the inner wall 38 of the product conduit 32, upstream of the further processing apparatus 30 (see built-up liquid phase material 40 shown in Figure 3). If the separate liquid phase is not removed from the product conduit 32, it may enter the further processing equipment 30, along with the gaseous material and could, potentially, interfere with the further processing of the gaseous material, or even damage downstream process apparatus, including but not limited to the further processing equipment 30, particularly if the separate liquid phase comprises corrosive substances.

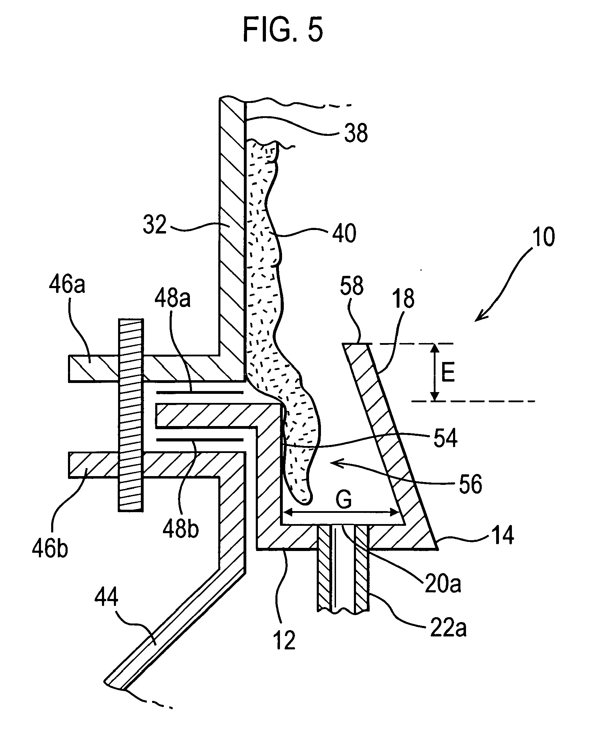

Thus, in accordance with the present invention, the collection trough 10 of the present invention is positioned in the flow path of the vapor product stream 28, downstream of the means for separating the entrained liquid (for example, downstream of the second elbow bend section 36, as shown in Figure 3) and upstream of the further processing equipment 30. The collection trough 10 is oriented with its base flange 12 being substantially perpendicular and proximate to the inner wall 38 of the product conduit 32 so as to catch and collect the separate liquid phase which drips and flows along the inner wall 38, as shown schematically in Figure 3, and in more detail in each of Figures 4 and 5, which will be discussed hereinafter.

The separate liquid phase collects and puddles on the base flange 12 of the collection trough 10 and drains through the drain openings 20a, 20b, 20c and into the drain conduits 22a, 22b, 22c (not all shown in Figure 3), which are fluidly connected to a main drain conduit 42. The main drain conduit 42 conducts the separate liquid phase away from the product conduit 32 and further processing apparatus 30. All, or a portion, of the separate liquid phase may then be fed to additional downstream processing apparatus (not shown) for further processing, or it may be directed to a collection tank (not shown) for later disposal or processing, or it may recycled to the reaction process, such as to the reactor vessel 26, as shown in Figure 3.

In one particular application, for example, the present invention may be applied in the context of a reaction process, which produces gaseous materials comprising entrained liquid which contains corrosive substances. The entrained liquid is separated from the gaseous material by inertial separation and must be collected and removed from the process and process apparatus prior to further processing of the gaseous materials to prevent corrosion of downstream apparatus. Downstream apparatus in such processes may include, for example, a condenser for condensing the gaseous materials to form a liquid product stream comprising the desired product.

The present invention will hereinafter be discussed relative to its application in an esterification process, wherein the vapor product stream contains entrained corrosive liquid, which is generally corrosive to process apparatus. However, it will be readily understood by persons of ordinary skill in the art how to adapt the apparatus and method of the present invention to be applied in a variety of chemical production processes and equipment wherein entrained liquids are separated by inertial separation techniques from gaseous materials which go on to further processing apparatus, while the separated liquid must be collected and redirected, regardless of whether it contains corrosive substances.

A perspective, partially cut-away view of the apparatus shown in area B of Figure 3, i.e., the collection trough 10, in use and installed in a conduit, is provided in Figure 4. More particularly, the collection trough 10 is shown in full perspective view, while the product conduit and further processing apparatus 30 are shown in cross-sectional view. Figure 5 provides an enlarged and more detailed cut-away perspective view of the apparatus shown in area C of Figure 4, showing the positioning and orientation of the collection trough 10 as installed in the product conduit 32 upstream of the further processing apparatus 30.

In the particular process apparatus shown in Figure 4, the product conduit 32 happens to be fluidly connected to further processing apparatus, a condenser 30, by a top channel head 44. Thus, the collection trough 10 of the present invention is installed between product conduit 32 and the top channel head 44, and more particularly, between the flanges 46a, 46b typically provided on such apparatus. A gasket of suitable material of construction may be positioned on either side of the base flange 12 of the collection trough 10 (see, for example, gaskets 48a, 48b shown in Figure 5), to provide a fluid seal against the flanges 46a, 46b. Persons of ordinary skill in the art are capable of selecting suitable materials of construction for the gaskets, depending upon the nature of the gaseous materials and entrained liquid which will be present in the process apparatus and contact the gaskets 48a, 48b.

As mentioned hereinabove, the collection trough 10 is positioned such that the base flange 12 is proximate to the inner wall 38 of the production conduit 32 so that the separate liquid phase, dripping and flowing down the inner wall (40), puddles and collects on the base flange 12. The separate liquid phase then drains through the drain openings 20a, 20b (not shown), 20c, and into the drain conduits 22a, 22b, 22c.

The drain conduits 22a, 22b, 22c may be removably connected, such as with flanged connections and gaskets (shown schematically in Figure 4 as 50a, 50b, 50c), to additional conduits 52a, 52b, 52c, which are affixed to the top channel head 44 (for example, by welded nozzles).

With reference particularly to Figure 5, the base flange 12 may include a raised lip or edge 54 (not shown in Figure 4), which creates a recessed area 56 in the base flange 12 for catching the separate liquid phase. Providing such a recessed area 56 may enable capture and handling of a larger volume of separate liquid phase. As mentioned hereinabove, the collection trough 10 is installed by positioning the outer edge of the base flange 12 between gaskets 48a, 48b and flanges 46a, 46b provided on the product conduit 32 and the top channel head 44 (which connects the condenser 30 to the product conduit 32).

Additional comments will now be provided concerning the sizing of the particular collection trough shown in Figure 5 and used in connection with a reaction process, with the understanding that the size and shape of the collection trough 10 of the present invention is not limited to that shown and discussed herein, but rather is within the ordinary skill of persons familiar with the relevant art to design and determine according to the needs of the particular process and process apparatus. For example, the dimensions of the collection trough 10 may be optimized in relation to the inner diameter of the product conduit 32, which is approximately 48 inches in the embodiment shown in Figures 4 and 5.

With reference to Figure 5, the distance between the inner wall 38 of the product conduit 32 and the upper edge 58 of the beveled wall 18 is approximately 1 3/8 inches. The distance (shown by arrow E in Figure 5) between the upper edge 58 (??) of the beveled wall 18 and the level of the flanges 46a, 46b holding the base flange 12 of the collection trough 10 is approximately 3 inches. These dimensions are important to assure adequate capture of the separate liquid phase and to avoid vapor turbulence from "sweeping" or re-entraining the separate liquid phase from the collection trough 10.

The depth of the recessed area 56 of the collection trough 10 (i.e., the vertical distance from the level of the flanges 46a, 46b to the bottom of the recessed area 56) is approximately 1 inch. This dimension is important to provide adequate lateral volume in the event that one of the drain openings or drain conduits is occluded, and also to reduce the risk of corrosion at the gaskets 46a, 46b when the separate liquid phase comprises corrosive substances.

The inner base width of the recessed area 56 (shown by arrow G in Figure 5) may be approximately 1 3/4 inches (during lower pressure operation of the chemical production process) or approximately 2 5/8 inches (during higher pressure operation of the chemical production process). The outer base width of the recessed area 56 of the base trough 12 may be approximately 2 1/2 inches (during lower pressure operation of the chemical production process) or approximately 3 3/8 inches (during higher pressure operation of the chemical production process). These dimensions affect reduction of dynamic (flow) pressure drop and whether there is sufficient space for drain openings of the desired dimensions. For example, in the particular embodiment shown in Figures 4 and 5, the drain openings (20a, 20b, 20c) are circular in shape and each have a diameter of approximately 1 inch (during lower pressure operation of the chemical production process) and approximately 2 1/16 inches (during higher pressure operation of the chemical production process).

Depending upon whether the entrained liquid and, therefore, the separate liquid phase, comprise corrosive substances, the collection trough 10, including the drain conduits (22a, 22b, 22c, 52a, 52b, 52c) may be constructed of suitable materials which are resistant to corrosion. For example, in the particular embodiment shown in Figures 4 and 5, the collection trough 10 is constructed of 316L stainless steel (3/8-inch thickness) for corrosion resistance, since the separate liquid phase is known to comprise corrosive acid substances. Similarly, the drain conduits (22a, 22b, 22c, 52a, 52b, 52c) are constructed of Hastelloy C-276 (schedule 40).

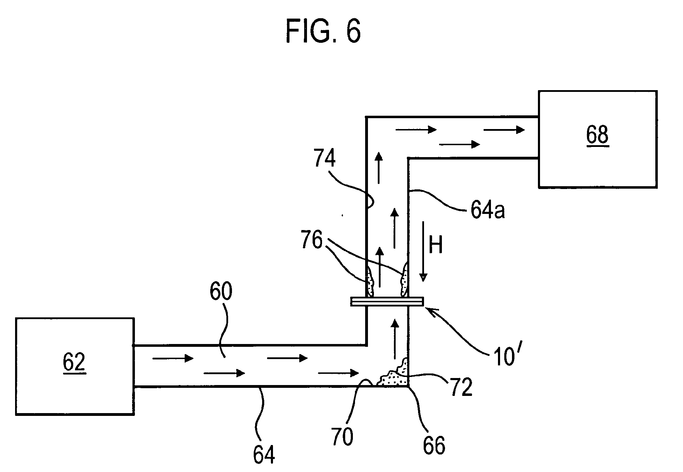

With reference now to Figure 6, the apparatus and method of the present invention may also be beneficially applied in circumstances where the bulk flow of the gaseous materials is counter-current, i.e., in substantially the opposite direction in the process apparatus after inertial separation, to the direction of movement or flow of the separate liquid phase. Figure 6 schematically illustrates one example of such a counter-current embodiment, wherein a gaseous stream 60 comprising gaseous materials and entrained liquid is discharged from apparatus, such as a compressor unit 62, and into a conduit 64 having an elbow bend 66. The gaseous stream 60 flows through the conduit 64 in the general direction shown by the arrows, to downstream operations, such as may involve a reactor 68.

As the gaseous stream 60 flows through the conduit 64, inertial separation occurs within the elbow bend 66, causing the entrained liquid to separate and accumulate on the interior surface 70 of the elbow bend 66 (accumulating liquid phase shown generally at 72 in Figure 6). Depending on the velocity of the gaseous stream 60 as it passes through the elbow bend 66, turbulence therein may lead to some re-entrainment of accumulated liquid phase into the flowing gaseous materials. Conditions further downstream of the elbow bend 66, as determined by the direction of flow of the gaseous materials, such as for example, residual turbulence, along with gravitational forces, may result in inertial separation of additional liquid from the gaseous materials, thereby resulting in accumulation of additional separate liquid phase (see, generally, additional liquid phase accumulation 76 in Figure 6) on the inner surface 74 of the vertical portion of the conduit 64a. The influence of gravity will cause this additional separate liquid phase 76 to flow downward, counter-currently to the direction of flow of the gaseous materials within the conduit 64, as shown by arrow H in Figure 6.

As shown in Figure 6, in accordance with the present invention, a collection trough 10' is positioned in the vertical portion of the conduit 64. More particularly, the collection trough 10' is positions upstream of the elbow bend 66, where the separate liquid phase 72 first accumulates, and between the elbow bend 66 and the location where additional separate liquid phase 76 accumulates on the inner surface 74 of the vertical portion conduit 64. As can be easily recognized from Figure 6, the additional liquid phase 76, which results from re-entrainment and subsequent separation in the vertical portion of the conduit 64a, is collected and re-directed from the conduit 64 and other process apparatus by the collection trough 10', as was described in detail hereinabove in connection with an earlier embodiment.

It is noted that, where the collection trough 10' and method of the present invention are not utilized in the configuration shown in Figure 6, the counter-current flow of the additional liquid phase 76 within the vertical portion of the conduit 64a is likely to result in an increased rate of oil accumulation (104) within the elbow bend 66 since it would continue to drip and flow downward, back into the elbow bend 66. Furthermore, as the volume of accumulated separate liquid phase 72 increases in the elbow bend 66, the free flow path within the elbow bend 66 will become obstructed, and the velocity of the gaseous materials passing therethrough will increase, and re-entrainment of liquid phase 72, 76 back into the gaseous stream 60 will be increase, which is undesirable. Empirical study of such a dynamic system has shown that, over time, this cycle of liquid phase accumulation and re-entrainment negates of the beneficial effect of inertial separation through the elbow and results in the eventual delivery of liquid phase to the downstream operations, which may be undesirable and may even cause hazardous conditions, depending upon the composition and other characteristics of the liquid phase and downstream operations. However, where the apparatus and method of the present invention are applied, for example, as shown schematically in Figure 6, the counter-current flow of the additional liquid phase 76 on the inner surface 74 of the vertical portion of the conduit 64a is interrupted and the cycle of re-entrainment within the elbow bend 66 is minimized and, therefore, the undesirable migration of liquid phase 72, 76 to downstream operations 68 is also minimized.

It will be understood that the embodiments of the present invention described hereinabove are merely exemplary and that a person skilled in the art may make variations and modifications without departing from the spirit and scope of the invention. All such variations and modifications are intended to be included within the scope of the present invention.

For example, as discussed earlier hereinabove, it will be apparent to persons of ordinary skill in the relevant art that the formation of two-phase streams (i.e., comprising liquid and gaseous materials) may result from physical processes other than purely mechanical (gas velocity-related inertial) entrainment. For example, a liquid-free gaseous stream close to its dewpoint temperature may cool within a conduit, forming a fog or mist that comprises both liquid-phase and gas-phase components. The composition of the liquid phase thus formed may be the same or different than the composition of the remaining gas phase, depending on the purity of the original gaseous stream, but the difficulties in handling such a two-phase stream will be similar to those for streams formed by mechanical (inertial) entrainment. The apparatus and method of the present invention are equally applicable to such situations, where a separate liquid phase and flowing gaseous materials are present in process equipment as the result of circumstances other than inertial separation, such as by condensation of a portion of the gaseous materials to create the separate liquid phase. The apparatus and method of the present invention are useful in such circumstances to collect and direct the separate liquid phase from the process equipment.

## Claims

1. An apparatus for collecting and redirecting liquid which has been separated from gaseous materials by inertial separation techniques, comprising:
(a) liquid catch means for catching the separated liquid;
(b) drain means to drain the separated liquid from the catch means;
(c) conducting means for conducting the separated liquid away from process apparatus; and
(d) flow-through means for simultaneously allowing the gaseous materials to flow, co-currently or counter-currently with the separated liquid, through and past the liquid catch means and downstream on to further processing equipment.

2. The apparatus according to Claim 1, wherein the liquid catch means comprises a flange and the flow-through means comprises a flow-through opening through the flange, the flange and flow-through opening being sized and shaped such that the separated liquid is caught by the flange, while the gaseous materials simultaneously flow through the flow-through opening and past the flange, co-currently or counter-currently with the separated liquid.

3. The apparatus according to Claim 1, wherein the drain means comprises at least one drain opening for allowing the separated liquid which is caught by the catch means to drain out of the apparatus and away from the process apparatus.

4. The apparatus according to Claim 1, wherein the conducting means comprises at least one conduit.

5. The apparatus according to Claim 2, wherein the flange has the at least one drain opening therethrough and the conducting means comprises at least one drain conduit, each of which is in fluid communication with one of the at least one drain opening.

6. A method for separating and collecting entrained liquid from a process stream comprising gaseous material and the entrained liquid, wherein at least a portion of entrained liquid is separated from the gaseous materials by inertial separation techniques and a separate liquid phase is formed, which drips and flows down an inner wall of process apparatus, said method comprising the step of:
(a) collecting the separate liquid phase by catching the separate liquid phase as it drips and flows down the inner wall of the process apparatus while simultaneously allowing the gaseous materials to flow on, co-currently or counter-currently with the separate liquid phase, to further processing equipment;
said collecting step being achieved by positioning collection means downstream of the dripping liquid phase and proximate to the inner wall of the process apparatus, the collection means having: liquid catch means for catching the separate liquid phase as it drips and flows from the inner wall of the process equipment; and flow-through means for simultaneously allowing the gaseous materials to flow, co-currently or counter-currently with the separate liquid phase, through and past the collection means and on to further processing equipment.

7. The method according to Claim 6, further comprising the step of
(b) draining the separate liquid phase from the catch means, wherein the collection means has drain means to drain the separate liquid phase from the catch means.

8. The method according to Claim 6, further comprising the step of
(c) conducting the separate liquid phase away from the process apparatus,
wherein the collection means having has conducting means, in fluid communication with the drain means, for conducting the drained separate liquid phase away from the process apparatus.
